# EUROPÄISCHE PATENTSCHRIFT

(11) **EP 2 198 656 B1**
(45) Veröffentlichungstag und Bekanntmachung des Hinweises auf die Patenterteilung: **20.06.2012**
(21) Anmeldenummer: 08831079.2
(22) Anmeldetag: 15.09.2008
(51) Int. Cl.: H04W 72/08

(54) **VERFAHREN UND EINRICHTUNG FÜR BASISSTATIONEN ZUR ZELLÜBERGREIFENDEN SIGNALDECODIERUNG**
METHOD AND APPARATUS FOR BASE STATIONS FOR THE CELL-OVERLAPPING SIGNAL DECODING
PROCÉDÉ ET APPAREIL POUR STATIONS DE BASE DE DÉCODAGE DE SIGNAUX COUVRANT LES CELLULES

(30) Priorität: 14.09.2007 DE 102007043949; 29.11.2007 DE 102007057860
(43) Veröffentlichungstag der Anmeldung: 23.06.2010
(73) Patentinhaber: Vodafone Holding GmbH, 40213 Düsseldorf (DE)
(72) Erfinder: MARSCH, Patrick, 01099 Dresden (DE); ROST, Peter, 01257 Dresden (DE); KHATTAK, Shahid, Peshawar University 25120 (PK)
(74) Vertreter: Weisse, Renate
(86) Internationale Anmeldenummer: PCT/DE2008/001524
(87) Internationale Veröffentlichungsnummer: WO 2009/033475

(56) Entgegenhaltungen:
- WO-A-2006/083201
- US-A- 670 599
- MOHAMED KAMOUN ET AL: "Base-station selection in cooperative single frequency cellular network" SIGNAL PROCESSING ADVANCES IN WIRELESS COMMUNICATIONS, 2007. SPAWC 200 7. IEEE 8TH WORKSHOP ON, IEEE, PI, 1. Juni 2007 (2007-06-01), Seiten 1-5, XP031189439 ISBN: 978-1-4244-0954-9
- CHOI Y-S ET AL: "Capacity of MIMO Systems With Antenna Selection" IEEE TRANSACTIONS ON WIRELESS COMMUNICATIONS, IEEE SERVICE CENTER, PISCATAWAY, NJ, US, Bd. 4, Nr. 4, 1. Juli 2005 (2005-07-01), Seiten 1759-1772, XP011139713 ISSN: 1536-1276

## Beschreibung

### Technisches Gebiet

Die Erfmdung betrifft ein Verfahren zum Herausfiltern eines Nutzsignals eines Mobilfunkendgeräts aus einer Mehrzahl von überlagerten Signalen, welche von Basisstationen in einem zellularen Mobilfunknetz empfangen werden, wobei die überlagerten Signale über eine Übertragungsressource übertragen werden, mit folgenden Verfahrensschritten:
a) Erfassen des überlagerten Signals des Mobilfunkendgeräts durch erreichte Basisstationen,
b) Ermitteln der Signalqualität des empfangenen und überlagerten Signals jeder erreichten Basisstation,
c) Übermitteln der Signalqualität an eine Entscheidungseinrichtung,
d) Auswahl einer ausgewählten Basisstation zur Decodierung des Nutzsignals des Mobilfunkendgeräts durch die Entscheidungseinrichtung.

Weiterhin betrifft die Erfindung eine Einrichtung zum Herausfiltern eines Nutzsignals eines Mobilfunkendgeräts aus einer Mehrzahl von überlagerten Signalen, welche von Basisstationen in einem zellularen Mobilfunknetz empfangen werden, wobei die überlagerten Signale über eine Übertragungsressource übertragen werden, mit folgenden Merkmalen:
a) Mittel zum Erfassen des überlagerten Signals des Mobilfunkendgeräts durch erreichte Basisstationen,
b) Mittel zum Ermitteln der Signalqualität des empfangenen und überlagerten Signals jeder erreichten Basisstation,
c) Weiterleitungsmittel zum Übermitteln der Signalqualität an eine Entscheidungseinrichtung,
d) Auswahlmittel zur Auswahl einer ausgewählten Basisstation zur Decodierung des Nutzsignals des Mobilfunkendgeräts durch die Entscheidungseinrichtung.

### Stand der Technik

Mobilfunknetze, wie die nach dem GSM oder UMTS-Standard, sind zellular aufgebaut. Dies bedeutet, dass ein Mobilfunknetz Mobilfunkmasten, so genannten Basisstationen, enthält. Diese Basisstationen haben einen Abdeckungsbereich, in dem sie Funksignale von einem Mobilfunkendgerät empfangen und entsprechend Signale zurück übermitteln können. Dieser Abdeckungsbereich der Basisstation bildet eine Funknetzzelle. Zudem kommt es oft vor, dass sich solche Funknetzzellen überschneiden. Üblicherweise werden bei benachbarten Funkzellen unterschiedliche Frequenzen verwendet, um Überlagerungen bzw. Interferenzen zu vermeiden.

Es sind aber auch Systeme bekannt, bei denen mehrere Basisstationen gleichzeitig Signale von Mobilfunkendgeräten empfangen. Bei diesem zellübergreifenden kooperativen Detektieren von Signalen wird je nach Standort eines Mobilfunkendgeräts bei jeder beteiligten Basisstation ein unterschiedliches, von der Dämpfung und der Laufzeit abhängiges Signal empfangen. Dabei kann durch eine Nutzung der gleichen Datenübertragungsressource, z.B. gleiche Frequenz oder Zeitschlitz, von mehreren Mobilfunkendgeräten bei jeder Basisstation ein überlagertes bzw. interferiertes Signal empfangen werden. Dieses empfangen überlagerte Signal enthält die entsprechenden Signale aller Mobilfunkendgeräte, welche dieselbe Übertragungsressource verwenden.

Durch entsprechende Verfahren lassen sich aus den überlagert empfangenen Signalen der beteiligten Basisstationen die Signale jedes einzelnen Mobilfunkendgeräts herausfiltern. Dazu müssen die jeweiligen, von verschiedenen Basisstationen empfangenen und überlagerten Signale zusammengeführt und verarbeitet werden. Üblicherweise werden die empfangenen überlagerten Signale in jeder Basisstation digitalisiert und an eine zentrale Verarbeitungseinheit weitergeleitet. Die zentrale Verarbeitungseinheit kann in einer Basisstation oder separat im Mobilfunknetz vorgesehen sein. In der zentralen Verarbeitungseinheit werden die überlagerten Signale verglichen und das empfangene Signal für jedes Mobilfunkendgerät herausgefiltert. Anschließend wird aus dem empfangenen Signal jedes beteiligten Mobilfunkendgeräts ein entsprechendes Nutzsignal decodiert. Durch ein solches Verfahren werden die erreichbaren Datenübertragungsraten beteiligter Mobilfiuikendgeräte verbessert.

Nachteilig an den bekannten Verfahren zum zellübergreifenden, kooperativen Detektieren von Signalen mehrerer Mobilfunkendgeräte, welche die gleiche Übertragungsressource verwenden, ist der notwendige, erhebliche Datentransfer zwischen den Basisstationen und der zentralen Verarbeitungseinheit. Zur zentralen Verarbeitung und Decodierung werden die bei allen beteiligten Basisstationen empfangenen überlagerten Signale digitalisiert und über Netzwerkverbindungen an die zentrale Verarbeitungseinheit übermittelt. Durch dieses große Datenaufkommen werden Netzwerkressourcen stark belastet. Gegebenenfalls muss kostenintensiv weitere Übertragungskapazität eingerichtet, erworben oder angemietet werden.

In der Veröffentlichung "Capacity Limits of MIMO Channels" von A. Goldsmith et al. IEEE Journal on Selected Areas in Communications, Vol. 21, No.5 June 2003 ist ein Verfahren zum Herausfiltern eines Signals aus überlagerten Signalen offenbart.

Die Veröffentlichung "Base-Station Selection in Cooperative Single Frequency Cellular Network" von Mohamed Kamoun et al. Signal Processing Advances in Wireless Communications, 2007. SPAWC 2007. IEEE 8TH Workshop on, IEEE, Pl, 1, Juni 2007 (2007-06-01) beschreibt verschiedene Algorithmen zur Bestimmung der benötigten Anzahl von Basisstationen in einem MIMO-System (Multiple Input Multiple Output), um den Backhaul zu reduzieren. Der Datenfluss innerhalb des zellulären Netzwerks ist durch den Backhaul, also die Anbindung der Basisstation an den übergeordneten Controller (BSC) enorm groß. Durch eine Reduzierung der Basisstationen wird der Backhaul vermindert und das Netzwerk entlastet. Zur Bestimmung der optimalen Anzahl an Basisstationen, werden in dieser Druckschrift verschiedene Algorithmen durchgeführt und die Ergebnisse miteinander verglichen.

### Offenbarung der Erfindung

Aufgabe der Erfindung ist es daher, die Datenmengen, die zwischen den kooperierenden Basisstationen und einer Verarbeitungseinheit ausgetauscht werden, zu reduzieren.

Erfindungsgemäß wird die Aufgabe bei einem Verfahren der eingangs genannten Art zum Herausfiltern eines Nutzsignals eines Mobilfunkendgeräts aus einer Mehrzahl von überlagerten Signalen mit folgenden weiteren Verfahrensschritten gelöst:
e) Ermitteln der Decodierbarkeit eines Nutzsignals eines Mobilfunkendgeräts aus dem empfangenen überlagerten Signal bei jeder erreichten Basisstation,
f) Auswählen der ausgewählten Basisstation aus einer der beteiligten Basisstationen, welche nicht direkt decodierbare überlagerte Signale von Mobilfunkendgeräten empfangen, durch die Entscheidungseinrichtung, wobei die Entscheidungseinrichtung dezentral in mehreren Basisstationen im Mobilfunknetz verteilt ist,
g) Decodieren und Übermitteln des dekodierten Nutzsignals an die ausgewählte Basisstation, falls das Nutzsignal bei der erreichten Basisstation decodiert werden kann,
h) Übermitteln des empfangenen überlagerten Signals an die ausgewählte Basisstation zur Decodierung, falls das Nutzsignal nicht vollständig von der erreichten Basisstation decodiert werden kann.

Weiterhin wird die Aufgabe durch eine Einrichtung der eingangs genannten Art zum Herausfiltern eines Nutzsignals eines Mobilfunkendgeräts aus einer Mehrzahl von überlagerten Signalen gelöst, wobei
e) die erreichten Basisstationen eine Ermittlungseinrichtung zum Ermitteln der Decodierbarkeit eines Nutzsignals eines Mobilfunkendgeräts aus den empfangenen überlagerten Signalen aufweisen,
f) die Entscheidungseinrichtung zum Auswählen der ausgewählten Basisstation aus einer der beteiligten Basisstationen, welche nicht direkt decodierbare überlagerte Signale von Mobilfunkendgeräten empfangen, ausgebildet ist und dezentral in mehreren Basisstationen im Mobilfunknetz verteilt ist,
g) Mittel zum Decodieren und Übermitteln des Nutzsignals an die ausgewählte Basisstation bei ausreichender Signalqualität und
h) Mittel zum Übermitteln der empfangenen überlagerten Signale an die ausgewählte Basisstation bei unzureichender Signalqualität des empfangenen Signals zur Decodierung vorgesehen sind.

Durch die vorliegende Erfindung wird vorgeschlagen, dass die empfangenen überlagerten Signale aller erreichten Basisstationen nicht mehr in einer von vornherein festgelegten zentralen Verarbeitungseinheit zusammengeführt werden, um sie anschließend auszuwerten und zu decodieren, sondern dass die Signaldaten je nach Signalqualität in einer oder mehrerer auszuwählender Basisstationen verarbeitet werden. Hierfür wird zunächst für jede beteiligte Basisstation die Signalqualität, beispielsweise das Signal-Interferenz-Rausch-Verhältnis bestimmt, und an eine Entscheidungseinrichtung übermittelt.

Mit Hilfe der Signalqualitäten wählt die Entscheidungseinrichtung eine Basisstation zum Auswerten der überlagerten Signale und zum Decodieren des Nutzsignals eines oder mehrerer Mobilfunkendgeräte aus. Dabei kann zunächst eine Bedarfsfeststellung erfolgen, bei der ermittelt wird, ob überhaupt mehrere Basisstationen zur Erzeugung eines Nutzsignals zusammenwirken müssen. Falls dies bejaht wird, wird geprüft, in welchem Umfang Daten ausgetauscht werden müssen. Denkbar ist beispielsweise die Übertragung des gesamten empfangenen Signals, eines oder mehrerer Nutzsignale oder Bruchteile der vorstehenden Signale. Diese Bedarfsfeststellung kann auch iteriert erfolgen. Kann eine Basisstation ein Nutzsignal jedoch vollständig decodieren, so wird den übrigen beteiligten Basisstationen dies signalisiert, da dann ein Datenaustauch nicht mehr erforderlich ist.

Entscheidungen darüber, ob und in welchem Format und Umfang Daten zwischen Basisstationen ausgetauscht werden sollen, werden so getroffen, dass eine vom

Systembetreiber zu definierende Metrik optimiert wird. So ist es für einen Systembetreiber vorteilhaft, wenn die erreichbaren Datenraten der Mobilfunkendgeräte in einem zellularen System durch eine Kooperation der Basisstationen gesteigert werden können. Es hängt jedoch vom Systembetreiber ab, ob es z.B. als wichtiger erachtet wird, die erreichbaren Datenraten der schwachen, benachteiligten Mobilfunkendgeräte im System zu steigern, oder ob die Summe aller Datenraten maximiert werden soll. Zudem muss jede mögliche Steigerung von Datenraten im Verhältnis zum Aufwand betrachtet werden, der für die zugrunde liegende Form der Kooperation erforderlich ist. Hierbei ist anzunehmen, dass die Menge an Daten, die zwischen Basisstationen ausgetauscht werden muss, einen der kritischsten Aspekte darstellt, da dies für einen Netzbetreiber unter Umständen mit hohen Kosten verbunden ist. Hierbei ist es denkbar, dass ein Systembetreiber einmalig in eine bestimmte Verbindungsinfrastruktur zwischen Basisstationen investiert und diese im laufenden Betrieb des Systems bestmöglich ausnutzen und zur Steigerung von Datenraten einsetzen möchte. Ein erhöhter Austausch von Daten zwischen Basisstationen, der über die installierte Infrastruktur hinausgeht, wäre in diesem Fall nicht möglich. Alternativ kann ein Systembetreiber im Bedarfsfall kurzfristig Verbindungskapazität zwischen Basisstationen anmieten. In diesem Fall gäbe es keine konkrete Einschränkung in der Gesamtkapazität der Verbindungen. Es ist aber abzuwägen, ob jede mögliche Erhöhung der Datenraten eines oder mehrerer Mobilfunkendgeräte die für die Kooperation der Basisstationen nötige Verbindungsmiete rechtfertigt.

Mit anderen Worten: Es ist eine Metrik-Funktion zu definieren, die als Eingangsparameter die erreichbaren Datenraten aller Mobilfunkendgeräte sowie die dazu erforderlichen Mengen an Daten, die zwischen Basisstationen ausgetauscht werden müssen, entgegen nimmt und als Ausgangsparameter eine globale Bewertungsgröße liefert. Jegliche Entscheidungen darüber, ob und in welchem Format und Umfang Daten zwischen Basisstationen zur Steigerung von Datenraten ausgetauscht werden, sind dann so zu treffen, dass diese, durch den Systembetreiber definierte Bewertungsgröße maximiert wird.

Dabei kann insbesondere auch eine Minimierung von zu transferierenden Datenmengen berücksichtigt werden.

Durch die Auswahl einer geeigneten Basisstation bei dem erfindungsgemäßen Verfahren oder mit den Mitteln der erfindungsgemäßen Einrichtung wird der Datentransfer erheblich reduziert. Die empfangenen Signale aller erreichten Basisstationen werden nicht mehr an eine a priori festgelegte Verarbeitungseinheit gesendet. Vielmehr wird nun je nach Signalqualitäten zu jeder Zeit eine geeignete Basisstation zur Decodierung des Nutzsignals eines Mobilfunkendgeräts ausgewählt. Von der ausgewählten Basisstation empfangene Signale werden nicht mehr weitergeleitet, sondern direkt verarbeitet. Die ausgewählte Basisstation übermittelt nur Informationen über die Signalqualität an die Entscheidungseinrichtung. Die Erfindung sorgt dafür, dass die Decodierung der Signale je nach empfangenen Signalqualitäten in einer unter dem Gesichtspunkt minimalen Datentransfers ausgewählten Basisstation erfolgen kann.

Eine vorteilhafte Ausbildung des erfindungsgemäßen Verfahren zum Herausfiltern eines Nutzsignals eines Mobilfunkendgeräts aus einer Mehrzahl von überlagerten Signalen wird dadurch erreicht, dass die erreichten Basisstationen ihre empfangenen Signale nur dann an die ausgewählte Basisstation zur Herausfilterung des Nutzsignals übermitteln, wenn die empfangenen Signale das Herausfiltern des Nutzsignals unterstützen. Die empfangenen Signale werden vorzugsweise digitalisiert übermittelt. Durch diese Maßnahme wird ein überflüssiges Übermitteln von Signalen vermieden, welche für das Herausfiltern des Nutzsignals nicht benötigt werden. Wenn beispielsweise eine Basisstation ein überlagertes Signal von zwei Mobilfunkendgeräten empfängt, kann ein von einer weiteren Basisstation empfangenes Signal eines dritten Mobilfunkendgeräts nicht zum Herausfiltern des Nutzsignals eines der beiden ersten Mobilfunkendgeräte verwendet werden. Weiterhin ist es auch möglich, nur einen zum Herausfiltern eines Nutzsignals notwendigen Anteil eines empfangenen Signals zu übermitteln. Somit wird ein Datenübertragungsvolumen bei einem zellübergreifenden kooperativen Empfangen und Herausfiltern von Signalen bedeutend verringert.

In einer weiteren bevorzugten Ausgestaltung des erfindungsgemäßen Verfahrens wird zunächst die Decodierbarkeit eines Nutzsignals eines Mobilfunkendgeräts aus den empfangenen überlagerten Signalen bei einer erreichten Basisstation ermittelt. Falls das Nutzsignal aus dem empfangenen Signal decodiert werden kann, wird das Nutzsignal decodiert und an die ausgewählte Basisstation übermittelt. Kann das Nutzsignal nicht decodiert werden, so wird das empfangene überlagerte Signal an die ausgewählte Basisstation übermittelt. Die Datenmenge des decodierten Nutzsignals ist wesentlich kleiner als die Datenmenge des dazugehörigen überlagerten Empfangssignals. Dabei ist das Nutzsignal ebenso wie das überlagerte Empfangssignal zum Herausfiltern von anderen Nutzsignalen aus einem anderen Empfangssignal geeignet. Durch eine Übermittlung von einem Nutzsignal statt einem digitalisierten überlagerten Empfangssignal wird wiederum die zu übermittelnde Datenmenge wesentlich verkleinert.

Die Auswahl der ausgewählten Basisstation erfolgt in einer vorteilhaften Ausbildung des erfindungsgemäßen Verfahrens aus einer der Basisstationen, welche nicht direkt decodierbare überlagerte Signale empfangen. Nicht direkt decodierbare, überlagerte Signale werden zum Herausfiltern und Decodieren der Nutzsignale zur ausgewählten Basisstation übermittelt und dort zusammen mit von anderen Basisstationen empfangenen Signalen verarbeitet. Durch die Auswahl einer Basisstation, welche nicht direkt decodierbare Signale empfängt, als Basisstation, in der das Herausfiltern und Decodieren der Nutzsignale stattfindet, wird ein Übermitteln der von dieser Basisstation empfangenen überlagerten Signale vermieden. Dies führt ebenfalls zu einem geringeren Datentransfervolumen. Es könnte aber auch eine Basisstation ausgewählt werden, die das Signal von einem oder mehreren Endgeräten decodieren kann, aber für das Herausfiltern von Nutzsignalen von anderen Endgeräten trotzdem geeignet ist.

Bei einer günstigen Variante des erfindungsgemäßen Verfahrens zum Herausfiltern eines Nutzsignals eines Mobilfunkendgeräts aus einer Mehrzahl von überlagerten Signalen ist die Entscheidungseinrichtung zentral als Einheit im Mobilfunknetz vorgesehen. Die zentrale Entscheidungseinrichtung befindet sich entweder in einer der beteiligten Basisstationen oder separat im Mobilfunknetz. Alle an einem zellübergreifenden kooperativen Empfang beteiligten Basisstationen senden Informationen über die jeweilige Signalqualität an die Entscheidungseinrichtung. Anhand der übermittelten Signalqualitäten entscheidet die Entscheidungseinrichtung, welche Basisstation zum Herausfiltern von Nutzsignalen verwendet werden soll. Durch eine zentrale Ausbildung der Entscheidungseinheit wird eine optimale Entscheidung ermöglicht.

Bei einigen Ausgestaltungen eines zellübergreifenden kooperativen Empfangs von Basisstation führt eine zentrale Entscheidungseinrichtung aber auch zu Nachteilen. Beispielsweise müssen bei sehr vielen beteiligten Basisstationen eine erhebliche Menge an Informationsdaten an die Entscheidungseinheit übermittelt werden. Zudem muss die Entscheidungseinheit zur Verarbeitung der Informationsdaten entsprechend aufwendig dimensioniert werden. Deshalb ist in einer weiteren vorteilhaften Variante des erfindungsgemäßen Verfahrens die Entscheidungseinrichtung dezentral in mehreren Basisstationen im Mobilfunknetz verteilt. Dadurch sind einzelne, dezentrale Komponenten der Entscheidungseinrichtung einfacher und kostengünstiger zu realisieren. Weiterhin wird der Datentransfer von Informationsdaten reduziert.

Eine vorteilhafte Ausbildung der erfindungsgemäßen Einrichtung zum Herausfiltern eines Nutzsignals eines Mobilfunkendgeräts aus einer Mehrzahl von überlagerten Signalen wird erzielt durch Mittel, mit denen die erreichten Basisstationen ihre empfangenen Signale an die ausgewählte Basisstation zur Herausfilterung des Nutzsignals übermitteln. In der ausgewählten Basisstation werden die von den Mitteln übertragenen überlagerten Signale der erreichten Basisstationen zusammen ausgewertet und von jedem beteiligten Mobilfunkendgerät das gesendete Signal herausgefiltert und das jeweilige Nutzsignal decodiert. Dadurch wird ein effektives zellübergreifendes und kooperatives Empfangen und Auswerten von Signalen mehrerer Mobilfunkendgeräte ermöglicht. Vorzugweise werden dabei nur empfangene überlagerte Signale von Basisstationen übermittel, welche zum Herausfiltern und Decodieren der Nutzsignale benötigt werden. Mit einer Vermeidung einer Übermittlung von nicht benötigten empfangenen Signalen wird eine deutliche Reduzierung des Datentransfervolumens erreicht.

In einer weiteren bevorzugten Ausgestaltung der erfindungsgemäßen Einrichtung weisen die erreichten Basisstationen eine Ermittlungseinrichtung zum Ermitteln der Decodierbarkeit eines Nutzsignals eines Mobilfunkendgeräts aus den empfangenen überlagerten Signalen auf. Liegt eine ausreichende Signalqualität vor, so wird das Nutzsignal mit ebenfalls vorgesehenen Mitteln zu Decodieren und Übermitteln decodiert und an die ausgewählte Basisstation weitergeleitet, falls es zum herausfiltern von anderen Nutzsignalen benötigt wird. Durch eine Übermittlung eines im Datenumfang kleineren Nutzsignals statt eines umfangreichen digitalisierten überlagerten Empfangssignals werden Übertragungskapazitäten eingespart.

Weiterhin sind in einer Ausgestaltung der erfindungsgemäßen Einrichtung vorteilhaft Mittel zum Übermitteln der empfangenen überlagerten Signale an die ausgewählte Basisstation bei unzureichender Signalqualität des empfangenen Signals zur Decodierung vorgesehen. Das empfangene überlagerte Signal wird digitalisiert weitergeleitet und bei der ausgewählten Basisstation zum Herausfiltern von Nutzsignalen verwendet. Dadurch wird ein wirksames zellübergreifendes kooperatives Empfangen und Auswerten von Signalen eines oder mehrerer Mobilfunkendgeräte erzielt.

Ferner ist die Entscheidungseinrichtung bei weiteren bevorzugten Ausbildungen der erfindungsgemäßen Einrichtung zum Herausfiltern eines Nutzsignals eines Mobilfunkendgeräts aus einer Mehrzahl von überlagerten Signalen entweder zentral als Einheit im Mobilfunknetz oder dezentral in mehreren Basisstationen des Mobilfunknetzes verteilt vorgesehen. Wie bereits bei den entsprechenden Ausbildungen des erfindungsgemäßen Verfahrens beschrieben, ist je nach Struktur und Nutzung des zellübergreifenden kooperativen Empfangs von Signalen durch mehrere Basisstationen entweder eine zentrale Einheit oder dezentral verteilt vorgesehene Komponenten für eine Entscheidungseinrichtung vorteilhaft. Mit einer zentralen Einheit lässt sich zuverlässig eine optimale Basisstation zum Herausfiltern von Nutzsignalen auswählen. Bei einer dezentral ausgestalteten Entscheidungseinrichtung wird das Übertragungsvolumen von Informationsdaten verkleinert und die einzelnen Komponenten sind entsprechend kleiner und günstiger dimensioniert.

Weitere Ausgestaltungen und Vorteile ergeben sich aus dem Gegenstand der Unteransprüche, sowie den Zeichnungen mit den dazugehörigen Beschreibungen.

Ein Ausführungsbeispiel der Erfindung ist nachstehend unter Bezugnahme auf die zugehörigen Zeichnungen näher erläutert.

### Kurze Beschreibung der Zeichnung

- Fig. 1: zeigt in einer schematischen Prinzipskizze ein Mobilfunknetz mit einem Ausführungsbeispiel einer erfindungsgemäßen Einrichtung.
- Fig. 2: zeigt in einer schematischen Prinzipskizze den Ablauf eines Ausführungsbeispiels des erfindungsgemäßen Verfahrens.

### Bevorzugtes Ausführungsbeispiel

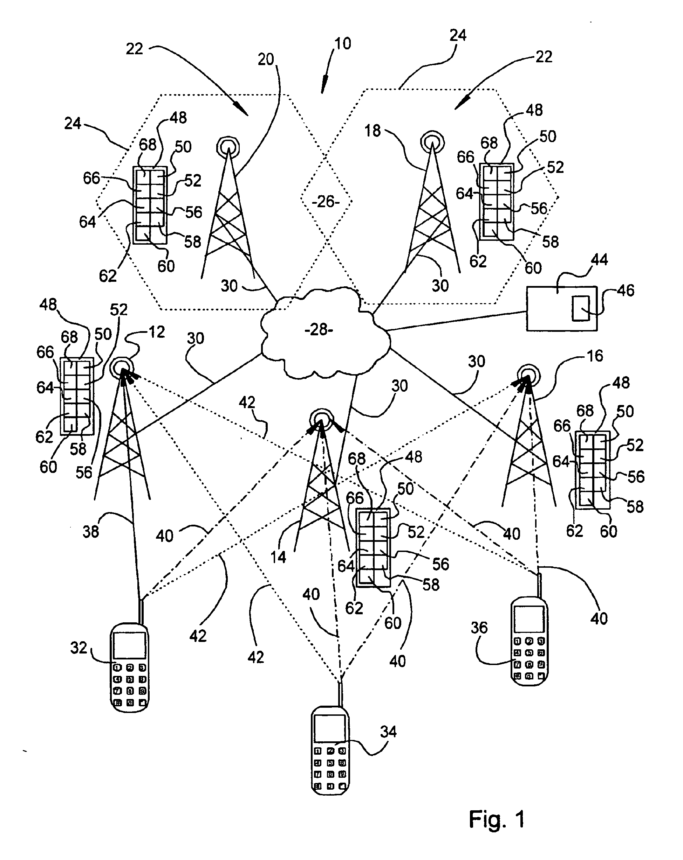

In Fig. 1 wird mit 10 ein zellulares Mobilfunknetz bezeichnet. Das Mobilfunknetz 10 entspricht beispielsweise dem GSM-, GPRS-, EDGE-, CDMA-, CDMA2000-, UMTS-, einem WLAN-Standard (z.B. IEEE 802.11) oder einem Standard der 4. Generation und enthält Basisstationen 12, 14, 16, 18, 20. Der Abdeckungsbereich für den Empfang jeder Basisstationen 12, 14, 16, 18, 20 bildet eine Funknetzzelle 22. Zur Vereinfachung des Mobilfunknetzes 10 werden diese Funknetzzellen 22 im Modell oft wabenförmig dargestellt. In Fig. 1 sind zur Verdeutlichung daher zwei Funknetzzellen 22 symbolisch als gepunktete Waben 24 angedeutet. Die Funknetzzellen 22 werden jedoch durch jede der Basisstationen 12, 14, 16, 18, 20 gebildet. Die Funkzellen 22 sind bei einem realen zellularen Mobilfunknetzen 10 durch Gebäude, Berge, und Täler in ihrer Ausdehnung unterschiedlich, daher kommt es oft zu Überschneidungen 26 der Funknetzzellen 22.

Die Basisstationen 12, 14, 16, 18, 20 sind miteinander zum zellübergreifenden kooperativen Detektieren und Decodieren von Signalen eines oder mehrerer Mobilfunkendgeräte auf der gleichen Signalübertragungsressource, wie beispielsweise einer Frequenz, einem Zeitschlitz oder ähnlichem, durch ein Netz 28 vernetzt. Das Netz 28 der Basisstationen 12, 14, 16, 18, 20 wird mit einer Wolke symbolisiert und besteht aus bereits vorhandenen oder zusätzlich zur Verfügung gestellten Netzwerkkomponenten. Die Basisstationen 12, 14, 16, 18, 20 sind über Linien 30 jeweils mit dem Netz 28 verbunden. Die Linien 30 können dabei beispielsweise eine Festnetzverbindung, ein Funknetzverbindung oder aber auch eine optische Netzverbindung sein.

Beispielhaft sind drei Mobilfunkendgeräte 32, 34, 36 aufgezeigt. Die von den Basisstationen 12, 14, 16, 18, 20 auf einer Signalübertragungsressource empfangenen Signale der Mobilfunkendgeräte 32, 34, 36 fallen je nach Standort der Mobilfunkendgeräte 32, 34, 36 und Umweltbedingungen unterschiedlich aus. Insbesondere wird das Signal eines Mobilfunkendgeräts 32, 34, 36 bei verschiedenen Basisstationen 12, 14, 16, 18, 20 abhängig von den Entfernungen mit unterschiedlicher Dämpfung und Laufzeit empfangen. Gut empfangene Signale 38 werden daher mit einer fetten Linie dargestellt. Mittelmäßig empfangene Signale 40 sind mit einer Strich-Punkt- und schlecht empfangene Signale 42 mit einer gepunkteten Linie dargestellt. Die Signale 38, 40, 42 der Mobilfunkendgeräte 32, 34, 36 werden von den Basisstationen 12, 14, 16, 18, 20 jeweils zusammen als vermischtes bzw. überlagertes Signal empfangen, da die Mobilfunkendgeräte 32, 34, 36 die gleiche Signalübertragungsressource verwenden. Solche Überlagerungen werden auch als Interferenzen bezeichnet.

Durch entsprechende, dem Fachmann, z.B. aus der eingangs genannten Veröffentlichung "Capacity Limits of MIMO Channels" von A. Goldsmith et al. IEEE Journal on Selected Areas in Communications, Vol. 21, No.5 June 2003 bekannte Verfahren ist ein Herausfiltern von Nutzsignalen aus den überlagerten Signalen möglich. Dazu müssen alle notwendigen überlagerten Signale zusammengeführt und gemeinsam ausgewertet werden. Dies wird in einer ausgewählten Basisstation 12, 14, 16, 18, 20 durchgeführt. Zur Auswahl einer Basisstation 12, 14, 16, 18, 20 ist eine Entscheidungseinrichtung 44 mit Auswahlmitteln 46 mit dem Netz 28 verbunden. Eine Entscheidung wird primär unter dem Gesichtspunkt eines minimalen Datentransfervolumens zwischen den Basisstationen 12, 14, 16, 18, 20 getroffen. Es ist aber auch eine Berücksichtigung einer erreichbaren Datenrate der Mobilfunkendgeräte 32, 34, 36 oder anderer Parameter möglich. In alternativen Ausführungen wird die Entscheidungseinrichtung 44 teilweise oder gänzlich aus dezentral im Mobilfunknetz 10 verteilten Komponenten gebildet, welche sich vorzugsweise in den Basisstationen 12, 14, 16, 18, 20 befinden.

Jede Basisstation 12, 14, 16, 18, 20 verfügt über eine prozessorgesteuerte Steuereinheit 48, in welcher Erfassungsmittel 50 zum Erfassen des empfangenen überlagerten Signals und Ermittlungsmittel 52 zum Ermitteln einer jeweiligen Signalqualität. Zur Beschreibung der Signalqualität wird beispielsweise das Signal-Interferenz-Rausch-Verhältnis (SINR = Signal to Interference and Noise Ratio) und/oder andere Werte verwendet. Mit Weiterleitungsmitteln 56 wird jeweils für alle empfangenen Mobilfunkendgeräte 32, 34, 36 eine ermittelte Signalqualität über das Netz 28 an die Entscheidungseinrichtung 44 übermittelt.

Weiterhin verfügt jede Basisstation 12, 14, 16, 18, 20 über Übermittlungsmittel 58 zum Übermitteln von empfangenen Signalen in digitalisierter Form an eine ausgewählte Basisstation 12, 14, 16, 18, 20. Da jede Basisstation 12, 14, 16, 18, 20 zum Herausfiltern von Nutzsignalen aus einer Mehrzahl von empfangenen Signalen ausgewählt werden kann, sind in jeder Basisstation Filtermittel 60 enthalten. Zum Decodieren eines Nutzsignals aus einem empfangenen oder herausgefilterten Signal besitzt jede Basisstation 12, 14, 16, 18, 20 eine Decodiereinheit 62. Ferner beinhaltet jede Basisstation 12, 14, 16, 18, 20 eine Ermittlungseinrichtung 64 zum Ermitteln einer Decodierbarkeit eines Nutzsignals aus einem empfangenen überlagerten Signal und Mittel 66 zum Übermitteln eines decodierten Nutzsignals an eine ausgewählte Basisstation 12, 14, 16, 18, 20. Zusätzlich sind Mittel 68 zum Übermitteln eines empfangenen überlagerten Signals vorgesehen, falls dieses Signal nicht decodierbar ist. Alternativ kann das Übermitteln der empfangenen überlagerten Signale auch von den Übermittlungsmitteln 58 durchgeführt werden.

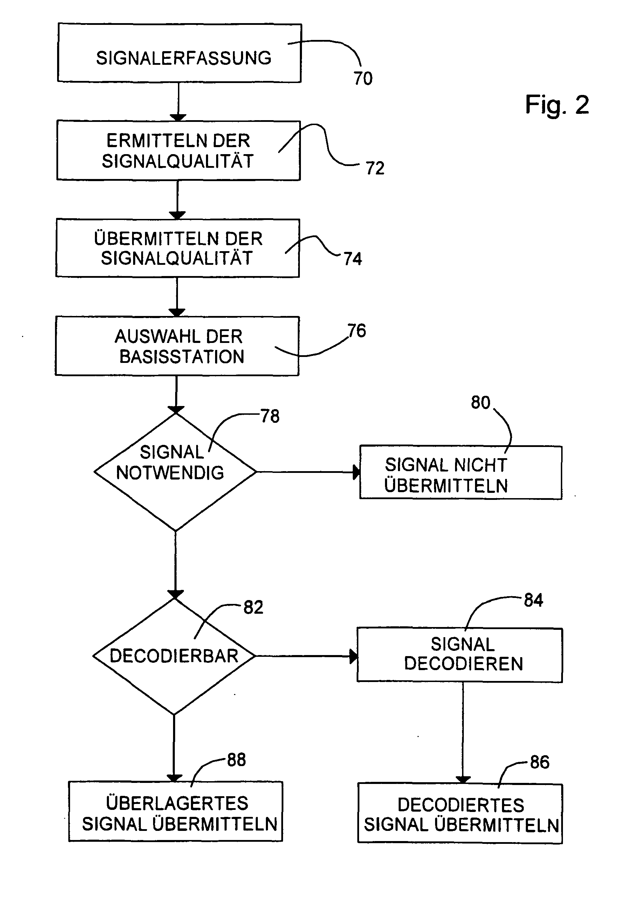

Fig. 2 zeigt den Verfahrensablauf eines Ausführungsbeispiels des Verfahrens für jede Basisstation 12, 14, 16, 18, 20 gemäß Fig. 1. Im Folgenden wird die Funktionsweise einer Einrichtung nach Fig. 1 zusammen mit dem Verfahrensablauf nach Fig. 2 beschrieben. Dabei wird sowohl auf Fig. 1 als auch auf Fig. 2 Bezug genommen. Kästen stellen in Fig. 2 immer einen Verfahrensschritt dar. Bedingte Verzweigungen werden durch Rauten veranschaulicht.

Zunächst werden bei jeder Basisstation 12, 14, 16, 18, 20 die empfangenen überlagerten Signale mit den Erfassungsmitteln 50 erfasst 70 und für jedes Mobilfunkendgerät 32, 36, 38 eine jeweilige Signalqualität mit den Ermittlungsmitteln 52 ermittelt 72. Dabei stellt sich nach Fig. 1 beispielhaft heraus, dass Basisstation 12 vom Mobilfunkendgerät 32 ein gutes Signal empfängt, welches nur geringfügig von den schlecht empfangenen Signalen der Mobilfunkendgeräte 34 und 36 überlagert wird. Aus dem bei der Basisstation 12 empfangenen überlagerten Signal soll daher beispielhaft ein Nutzsignal des Mobilfunkendgeräts 32 decodierbar sein. Die Basisstation 14 empfängt von den Mobilfunkendgeräten 32, 34, 36 jeweils ein mittelmäßiges Signal. Aus dem vermischten empfangenen Signal kann keines der Nutzsignale von Mobilfunkendgerät 32, 34, 36 decodiert werden. Die Basisstation 16 empfängt von Mobilfunkendgerät 32 ein schlechtes und von den Mobilfunkendgeräten 34 und 36 jeweils ein mittelmäßiges Signal. Auch aus dem bei der Basisstation 16 empfangenen überlagerten Signal ist kein Nutzsignal decodierbar. Die Basisstationen 18 und 20 empfangen keine Signale von den Mobilfunkendgeräten 32, 34, 36.

Die oben beschriebenen Signalqualitäten werden von den Basisstationen 12, 14, 16, 18, 20 mit den Weiterleitungsmitteln 56 an die Entscheidungsvorrichtung 44 übermittelt 74. Die Entscheidungseinrichtung 44 stellt anhand der Signalqualitäten fest, dass sowohl Basisstation 14 als auch Basisstation 16 Signale von den Mobilfunkendgeräten 32, 34, 36 empfangen, aber kein Nutzsignal dekodieren können. Unter dem Gesichtspunkt einer Minimierung der Menge an zu übertragenden Daten wählt 76 die Entscheidungseinrichtung 44 deshalb mit den Auswahlmitteln 46 beispielhaft die Basisstation 14 zum Herausfiltern und Decodieren der Nutzsignale der Mobilfunkendgeräte 34 und 36 aus.

Die anderen Basisstationen 12, 16, 18 ,20 überprüfen nun oder bekommen von der Entscheidungseinrichtung 44 mitgeteilt, ob die bei ihnen empfangenen überlagerten Signale in der ausgewählten Basisstation 14 zum Herausfiltern und Decodieren der Nutzsignale der Mobilfunkendgeräte 34, 36 benötigt werden. Empfangene überlagerte Signale der Basisstationen 18 und 20 enthalten keine Signale von den Mobilfunkendgeräten 34, 36. Die Basisstationen 18, 20 übermitteln daher ihre empfangenen Signale nicht 80 an die ausgewählte Basisstation 14. Die Basisstation 12 stellt mit ihrer Ermittlungseinrichtung 64 die Decodierbarkeit des Nutzsignals des Mobilfunkendgeräts 32 fest 82 und decodiert 84 das Nutzsignal mit ihrer Decodiereinheit 62. Anschließend übermittelt 86 die Basisstation 12 mit ihren Mitteln 66 das decodierte Nutzsignal des Mobilfunkendgeräts 32 an die ausgewählte Basisstation 14. Die Basisstation 16 stellt mit ihrer Ermittlungseinrichtung 64 fest 82, dass kein Nutzsignal aus dem empfangenen überlagerten Signal decodiert werden kann und übermittelt 88 das empfangene überlagerte Signal an die ausgewählte Basisstation 14.

Aus dem Nutzsignal des Mobilfunkendgeräts 32 von der Basisstation 12, dem empfangenen überlagerten Signal der Basisstation 16 und dem selber empfangenen überlagerten Signal filtert und decodiert die Basisstation 14 mit Hilfe ihrer Filtereinheit 60 und ihrer Decodiereinheit 62 die Nutzsignale der Mobilfunkendgeräte 34 und 36.. Die Nutzsignale aller Mobilfunkendgeräte 32, 34, 36 stehen nun zur weiteren Verarbeitung bzw. Übertragung dem Mobilfunknetz 10 zu Verfügung.

Durch ein Auswahl 76 einer Basisstation 12, 14, 16, 18, 20 zum Herausfiltern von Nutzsignalen, dem Beschränken 78 eines Übermittelns 88, 86 auf tatsächlich benötigte Signale und ein Übermittelt 86 von decodierten Nutzsignalen wird eine erhebliche Reduktion des Datentransfers bei einem zellübergreifende kooperativen Detektieren von Signalen in einem Mobilfunknetz 10 erreicht.

## Patentansprüche

1. Verfahren zum Herausfiltern eines Nutzsignals eines Mobilfunkendgeräts (32, 34, 36) aus einer Mehrzahl von überlagerten Signalen, welche von Basisstationen (12, 14, 16, 18, 20) in einem zellularen Mobilfunknetz (10) empfangen werden, wobei die überlagerten Signale über eine Übertragungsressource übertragen werden, mit folgenden Verfahrensschritten:
a) Erfassen (70) des überlagerten Signals des Mobilfunkendgeräts (32, 34, 36) durch erreichte Basisstationen (12, 14, 16),
b) Ermitteln (72) der Signalqualität des empfangenen und überlagerten Signals jeder erreichten Basisstation (12, 14, 16),
c) Übermitteln (74) der Signalqualität an eine Entscheidungseinrichtung (44),
d) Auswahl (76) einer ausgewählten Basisstation (14) zur Decodierung des Nutzsignals des Mobilfunkendgeräts (32, 34, 36) durch die Entscheidungseinrichtung (44),
**gekennzeichnet durch** die Verfahrensschritte:
e) Ermitteln (82) der Decodierbarkeit eines Nutzsignals eines Mobilfunkendgeräts (32, 34, 36) aus dem empfangenen überlagerten Signal bei jeder erreichten Basisstation (12, 14, 16),
f) Auswählen (76) der ausgewählten Basisstation (14) aus einer der beteiligten Basisstationen (14, 16), welche nicht direkt decodierbare überlagerte Signale von Mobilfunkendgeräten (32, 34, 36) empfangen, **durch** die Entscheidungseinrichtung (44), wobei die Entscheidungseinrichtung (44) dezentral in mehreren Basisstationen (12, 14, 16, 18, 20) im Mobilfunknetz (10) verteilt ist,
g) Decodieren (84) und Übermitteln (86) des dekodierten Nutzsignals an die ausgewählte Basisstation (14), falls das Nutzsignal bei der erreichten Basisstation (12) decodiert werden kann,
h) Übermitteln (88) des empfangenen überlagerten Signals an die ausgewählte Basisstation (14) zur Decodierung, falls das Nutzsignal nicht vollständig von der erreichten Basisstation (16) decodiert werden kann.

2. Verfahren zum Herausfiltern eines Nutzsignals eines Mobilfunkendgeräts (32, 34, 36) aus einer Mehrzahl von überlagerten Signalen nach Anspruch 1, **dadurch gekennzeichnet, dass** die erreichten Basisstationen (12, 14, 16) ihre empfangenen Signale nur dann an die ausgewählte Basisstation (14) zur Herausfilterung des Nutzsignals übermitteln (86, 88), wenn die empfangenen Signale das Herausfiltern des Nutzsignals unterstützen.

3. Einrichtung zum Herausfiltern eines Nutzsignals eines Mobilfunkendgeräts (32, 34, 36) aus einer Mehrzahl von überlagerten Signalen, welche von Basisstationen (12, 14, 16, 18, 20) in einem zellularen Mobilfunknetz (10) empfangen werden, wobei die überlagerten Signale über eine Übertragungsressource übertragen werden, mit folgenden Merkmalen:
a) Mittel (50) zum Erfassen des überlagerten Signals des Mobilfunkendgeräts (32, 34, 36) durch erreichte Basisstationen (12, 14, 16),
b) Mittel (52) zum Ermitteln der Signalqualität des empfangenen und überlagerten Signals jeder erreichten Basisstation (12, 14, 16),
c) Weiterleitungsmittel (56) zum Übermitteln der Signalqualität an eine Entscheidungseinrichtung (44),
d) Auswahlmittel (46) zur Auswahl einer ausgewählten Basisstation (14) zur Decodierung des Nutzsignals des Mobilfunkendgeräts (32, 34, 36) durch die Entscheidungseinrichtung (44),
**dadurch gekennzeichnet, dass**
e) die erreichten Basisstationen (12, 14, 16) eine Ermittlungseinrichtung (64) zum Ermitteln der Decodierbarkeit eines Nutzsignals eines Mobilfunkendgeräts (32, 34, 36) aus den empfangenen überlagerten Signalen aufweisen,
f) die Entscheidungseinrichtung (44) zum Auswählen (76) der ausgewählten Basisstation (14) aus einer der beteiligten Basisstationen (14, 16), welche nicht direkt decodierbare überlagerte Signale von Mobilfunkendgeräten (32, 34, 36) empfangen, ausgebildet ist und dezentral in mehreren Basisstationen (12, 14, 16, 18, 20) im Mobilfunknetz (10) verteilt ist,
g) Mittel (62, 66) zum Decodieren und Übermitteln des Nutzsignals an die ausgewählte Basisstation (14) bei ausreichender Signalqualität und
h) Mittel (68) zum Übermitteln der empfangenen überlagerten Signale an die ausgewählte Basisstation (14) bei unzureichender Signalqualität des empfangenen Signals zur Decodierung vorgesehen sind.

## Claims

1. A method for filtering a useful signal of a mobile radio terminal (32, 34, 36) out of a plurality of superimposed signals which are received from base stations (12, 14, 16, 18, 20) in a cellular mobile radio network (10), wherein the superimposed signals are transmitted over a transmission resource, the method comprising the following steps:
a) detecting (70) the superimposed signal of the mobile radio terminal (32, 34, 36) by reached base stations (12, 14, 16),
b) determining (72) the signal quality of the received and superimposed signal of each reached base station (12, 14, 16),
c) transmitting (74) the signal quality to a decision device (44),
d) selecting (76) a selected base station (14) for decoding the useful signal of the mobile radio terminal (32, 34, 36) by the decision device (44),
**characterized by** the steps of:
e) determining (82) the decodability of a useful signal of a mobile radio terminal (32, 34, 36) out of the received superimposed signal at each reached base station (12, 14, 16),
f) selecting (76) the selected base station (14) from one of the participating base stations (14, 16) which receive not directly decodable superimposed signals from mobile radio terminals (32, 34, 36), by the decision device (44), wherein the decision device (44) is distributed in several base stations (12, 14, 16, 18, 20) in the mobile radio network (10),
g) decoding (84) and transmitting (86) the decoded useful signal to the selected base station (14), if the useful signal can be decoded at the reached base station (12),
h) transmitting (88) the received superimposed signals to the selected base station (14) for decoding, if the useful signal cannot be decoded completely by the reached base station (16).

2. A method for filtering a useful signal of a mobile radio terminal (32, 34, 36) out of a plurality of superimposed signals according to claim 1, **characterized in that** the reached base stations (12, 14, 16) only transmit (86, 88) their received signals to the selected base station (14) for filtering out the useful signal if the received signals support the filtering out of the useful signal.

3. A device for filtering a useful signal of a mobile radio terminal (32, 34, 36) out of a plurality of superimposed signals which are received from base stations (12, 14, 16, 18, 20) in a cellular mobile radio network (10), wherein the superimposed signals are transmitted over a transmission resource, comprising the following features:
a) means (50) for detecting the superimposed signal of the mobile radio terminal (32, 34, 36) by reached base stations (12, 14, 16),
b) means (52) for determining the signal quality of the received and superimposed signal of each reached base station (12, 14, 16),
c) transfer means (56) for transmitting the signal quality to a decision device (44),
d) selection means (46) for selecting a selected base station (14) for decoding the useful signal of the mobile radio terminal (32, 34, 36) by said decision means (44),
**characterized in that**
e) the reached base stations (12, 14, 16) comprise a determination device (64) for determining the decodability of a useful signal of a mobile radio terminal (32, 34, 36) from the received superimposed signals,
f) the decision device (44) is configured for selecting (76) the selected base station (14) from one of the participating base stations (14, 16) which receive not directly decodable superimposed signals from mobile radio terminals (32, 34, 36), and is decentrally distributed in several base stations (12, 14, 16, 18, 20) in the mobile radio network (10),
g) means (62, 66) for decoding and transmitting the useful signal to the selected base station (14) if the signal quality is sufficient, and
h) means (68) for transmitting the received superimposed signals to the selected base station (14) if the signal quality of the received signal is insufficient for decoding, are provided.

## Revendications

1. Procédé pour filtrer un signal utile d'un terminal de radiotéléphonie mobile (32, 34, 36) parmi plusieurs signaux superposés reçus par des stations de base (12, 14, 16, 18, 20) situées dans un réseau de radiotéléphonie cellulaire (10), les signaux superposés étant transmis par une ressource de transmission, comportant les étapes de procédé suivantes :
(a) détection (70) du signal superposé du terminal de radiotéléphonie mobile (32, 34, 36) par les stations de base atteintes (12, 14, 16),
(b) détermination (72) de la qualité du signal superposé reçu de chaque station de base atteinte (12, 14, 16),
(c) transmission (74) de la qualité du signal à un dispositif de décision (44),
(d) sélection (76) d'une station de base sélectionnée (14) pour le décodage du signal utile du terminal de radiotéléphonie mobile (32, 34, 36) par le dispositif de décision (44),
**caractérisé par** les étapes de :
(e) détermination (82) de la décodabilité d'un signal utile d'un terminal de radiotéléphonie mobile (32, 34, 36) parmi le signal superposé reçu au niveau de chaque station de base atteinte (12, 14, 16),
(f) sélection (76) de la station de base sélectionnée (14) par le dispositif de décision (44) parmi l'une des stations de base participantes (14, 16) recevant des signaux superposés, non décodables directement, de terminaux de radiotéléphonie (32, 34, 36), le dispositif de décision (44) étant réparti de manière décentralisée dans le réseau de radiotéléphonie mobile (10) dans plusieurs stations de base (12, 14, 16, 18, 20),
(g) décodage (84) et transmission (86) du signal utile décodé à la station de base sélectionnée (14) au cas où le signal utile peut être décodé par la station de base atteinte (12),
(h) transmission (88) du signal superposé reçu à la station de base sélectionnée (14) pour être décodé au cas où le signal utile ne peut pas être entièrement décodé par la station de base atteinte (16).

2. Procédé pour filtrer un signal utile d'un terminal de radiotéléphonie mobile (32, 34, 36) parmi plusieurs signaux superposés selon la revendication 1, **caractérisé en ce que** les stations de base atteintes (12, 14, 16) ne transmettent (86, 88) leurs signaux reçus à la station de base sélectionnée (14) pour filtrer le signal utile que lorsque les signaux reçus assistent le filtrage du signal utile.

3. Dispositif pour filtrer un signal utile d'un terminal de radiotéléphonie mobile (32, 34, 36) parmi plusieurs signaux superposés reçus par des stations de base (12, 14, 16, 18, 20) situées dans un réseau de radiotéléphonie cellulaire (10), les signaux reçus étant transmis par une ressource de transmission, comportant les caractéristiques suivantes :
(a) des moyens (50) pour détecter le signal superposé du terminal de radiotéléphonie mobile (32, 34, 36) par les stations de base atteintes (12, 14, 16),
(b) des moyens (52) pour déterminer la qualité du signal superposé reçu de chaque station de base (12, 14, 16),
(c) des moyens de transfert (56) pour transmettre la qualité du signal à un dispositif de décision (44),
(d) des moyens de sélection (46) pour sélectionner une station de base sélectionnée (14) pour le décodage du signal utile du terminal de radiotéléphonie mobile (32, 34, 36) par le dispositif de décision (44),
**caractérisé en ce que**
(e) les stations de base atteintes (12, 14, 16) présentent un dispositif de détermination (64) pour déterminer la décodabilité d'un signal utile d'un terminal de radiotéléphonie mobile (32, 34, 36) parmi les signaux superposés reçus,
(f) le dispositif de décision (44) est configuré pour sélectionner (76) la station de base sélectionnée (14) parmi l'une des stations de base participantes (14, 16) recevant des signaux superposés, non décodables directement, de terminaux de radiotéléphonie mobile (32, 34, 36) et est réparti de manière décentralisée dans le réseau de radiotéléphonie mobile (10) dans plusieurs stations de base (12, 14, 16, 18, 20),
(g) des moyens (62, 66) sont prévus pour décoder et transmettre le signal utile à la station de base sélectionnée (14) en cas de suffisance de la qualité du signal et
(h) des moyens (68) sont prévus pour transmettre les signaux superposés reçus à la station de base sélectionnée (14) en cas d'insuffisance de la qualité du signal reçu en vue d'être décodé.
